# EUROPÄISCHE PATENTSCHRIFT

(11) **EP 0 753 928 B1**
(45) Veröffentlichungstag und Bekanntmachung des Hinweises auf die Patenterteilung: **25.10.2000**
(21) Anmeldenummer: 96110591.3
(22) Anmeldetag: 01.07.1996
(51) Int. Cl.: H02K 1/18, H02K 5/20

(54) **Elektromotor in Skelettbauform**
Electrical motor in framework construction
Moteur électrique en forme de construction à claire-voie

(30) Priorität: 14.07.1995 CH 208095
(43) Veröffentlichungstag der Anmeldung: 15.01.1997
(73) Patentinhaber: INVENTIO AG, CH-6052 Hergiswil (CH)
(72) Erfinder: Cholinski, Andrzej, Masch. Ing., 6030 Ebikon (CH)

(56) Entgegenhaltungen:
- DE-C- 532 315
- GB-A- 754 430
- US-A- 1 901 315
- US-A- 2 112 747
- PATENT ABSTRACTS OF JAPAN vol. 005, no. 007 (E-041), 17.Januar 1981 & JP-A-55 136837 (HITACHI LTD), 25.Oktober 1980

## Beschreibung

Die Erfindung betrifft einen Elektromotor in Skelettbauform bestehend aus quer zur Motorwelle verlaufenden Flanschen mit konzentrisch zur Motorwelle angeordneten Öffnungen, in denen längs zur Motorwelle Rippen verlaufen, an denen ein Statorpaket angeordnet ist, wobei Flansche und Rippen ein tragendes Motorskelett bilden, wobei mindestens ein Flansch an seiner Öffnung angeordnete Montageeinschnitte aufweist, in die die Rippen einsteckbar sind.

Gehäuse von grösseren Elektromotoren, insbesondere von Asynchron-Drehstrommotoren werden üblicherweise als Kastengehäuse oder Rippengehäuse gebaut. Dabei wird als Tragstruktur für das Statorpaket ein tragender Kasten verwendet, der auf der Innenseite achsial verlaufende Rippen aufweist, an denen das Statorpaket befestigt wird. In einer weiteren Bauart wird ein tragendes Skelett zur Aufnahme des Statorpaketes verwendet. Das Skelett besteht aus mehreren Querringen, in denen Längsrippen angeordnet sind. In den Längsrippen wird das Statorpaket verspannt. Eine die Querringe überdeckende Verschalung schliesst das Skelett nach aussen hin ab.

Nachteilig bei den bekannten Bauformen sind die vielen Einzelteile, die in aufwendiger Schweissarbeit zusammengefügt werden müssen. Viele Einzelteile ergeben wiederum ein grösseres Gesamtgewicht des Motors. Weiter nachteilig ist auch der erschwerte Zugang beim Einbau des Statorpaketes.

Aus der Schrift US 1 901 315 und aus der Schrift JP 55 136 837 ist ein Elektromotor in Skelettbauform bekannt geworden, bei der zusammengefügte Flansche und Rippen eine tragende Struktur bilden. Mehrere kreisringförmige Flansche werden mittels querlaufenden Stegen auf Abstand gehalten. Als Montageerleichterung weisen die Flansche innenseitig Ausschnitte auf, in die die Stege eingelegt werden und mit den Flanschen verschweisst werden.

Nachteilig bei dieser Bauform ist, dass die Flansche vor dem Einlegen der Stege genau positioniert, ausgerichtet und fixiert werden müssen. Danach müssen auch die Stege positioniert und fixiert werden. Erst dann können die Flansche und Stege zusammen verschweisst werden. Der grosse Montageaufwand verteuert die Skelettbauweise erheblich.

Hier will die Erfindung Abhilfe schaffen. Die Erfindung, wie sie in dem Anspruch 1 gekennzeichnet ist, löst die Aufgabe, die Nachteile der bekannten Einrichtung zu vermeiden und eine Skelettbauweise vorzuschlagen, bei der keine Montagelehren notwendig sind.

Die durch die Erfindung erreichten Vorteile sind im wesentlichen darin zu sehen, dass die Einzelteile aus Blechtafeln gleicher Dicke ausgeschnitten werden können, dass mit der erfindungsgemässen Bauweise ein sehr robustes, steifes Skelett mit niedrigem Gewicht machbar ist, dass dank des guten Zuganges bei Schweiss- und Montagearbeiten die Fertigungskosten niedrig gehalten werden können, dass einfache Stanz- und Biegeteile für Verkleidungen verwendet werden können und dass Klemmenkasten und Ventilatoren oben am Motor angeordnet werden können, wodurch eine Motorvariante für unterschiedliche Maschinenanordnungen verwendet werden kann.

Im folgenden wird die Erfindung anhand von lediglich einen Ausführungsweg darstellenden Zeichnungen näher erläutert. Es zeigen:
- Fig. 1: eine Antriebsmaschine für Aufzüge mit Maschinenrahmen, Treibscheibe, Bremse und dem erfindungsgemässen Motor,
- Fig. 2: Einzelheiten des erfindungsgemässen Motors mit Welle, Rotor, Stator, Skelett und Verschalung,
- Fig. 3: eine Seitenansicht des Motors gemäss Fig. 2,
- Fig. 3a: einen schematischen Aufbau eines Luftkastens,
- Fig. 4: Einzelheiten der Luftführung entlang eines Statorpaketes,
- Fig. 5: einen Schnitt entlang der Linie B-B der Fig. 4,
- Fig. 6: eine räumliche Darstellung des aus Flanschen und Rippen bestehenden Skelettes,
- Fig. 7: eine Seitenansicht des Skelettes,
- Fig. 8: eine Frontansicht eines ersten äusseren Flansches,
- Fig. 9: eine Frontansicht eines zweiten äusseren Flansches,
- Fig. 10: eine Frontansicht eines inneren Flansches und
- Fig. 11: eine Draufsicht einer Rippe.

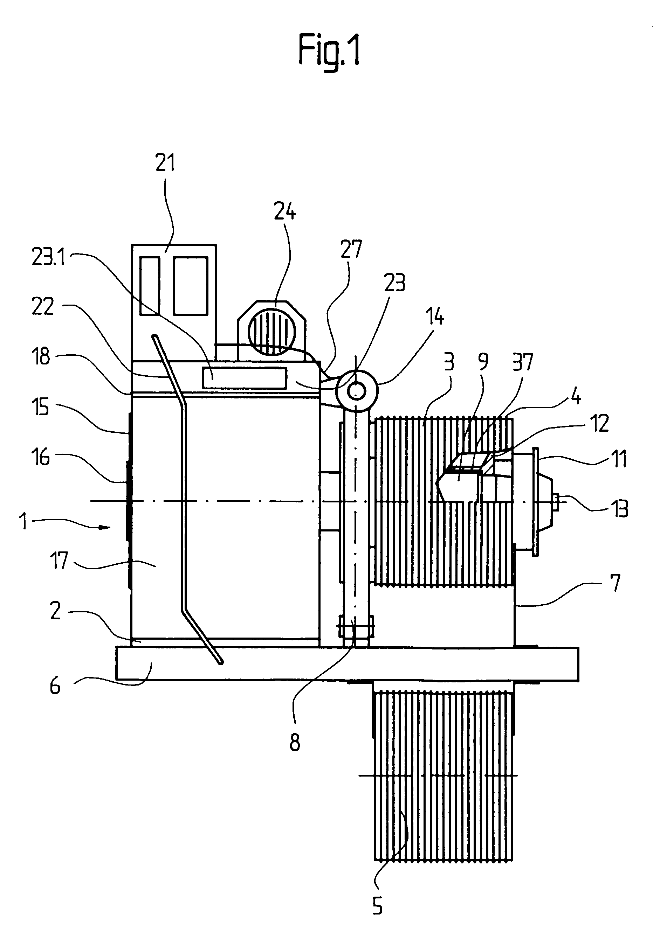

In den Fig. 1 bis 11 ist mit 1 ein auf einer Konsole 2 angeordneter Motor bezeichnet, der eine Treibscheibe 3 mit Seilrillen 4 antreibt. Nicht dargestellt ist ein über die Treibscheibe 3 und eine Gegenrolle 5 geführter Seilstrang, an dem eine Aufzugskabine und ein Gegengewicht angeordnet sind. Ein Maschinenrahmen 6 trägt die Konsole 2, einen Lagerbock 7, eine Backenbremse 8 und die Gegenrolle 5. Eine Welle 9 ist einenends mittels eines ersten Lagers 10 im Motor 1 und mittels eines zweiten Lagers 11 im Lagerbock 7 gelagert. Die Treibscheibe 3 steht mittels eines lösbaren Spannsatzes 12 in fester Verbindung mit der Welle 9. Treibscheibe 3 und Welle 9 sind auch mittels einer Passfeder 37 verbunden. Am abtriebsseitigen Ende der Welle 9 ist ein zur Erfassung der Umdrehungen vorgesehener Impulsgenerator 13 angeordnet. Die an der Treibscheibe angreifende Backenbremse 8 wird von einer Kraftvorrichtung 14, beispielsweise einer hydraulischen Vorrichtung, gelüftet. Das erste Lager 10 wird von einem stirnseitig am Motor 1 angeordneten Lagerschild 15 getragen, an dem ein Lagerdeckel 16 angeordnet ist, der das erste Lager 10 schützt. Eine erste Verschalung 17, eine zweite Verschalung 18 mit einem Lufteintritt 18.1 und eine dritte Verschalung 19 schliessen den Motor 1 am Umfang ab. Unten wird der Motor 1 von einer vierten Verschalung 20 abgeschlossen.

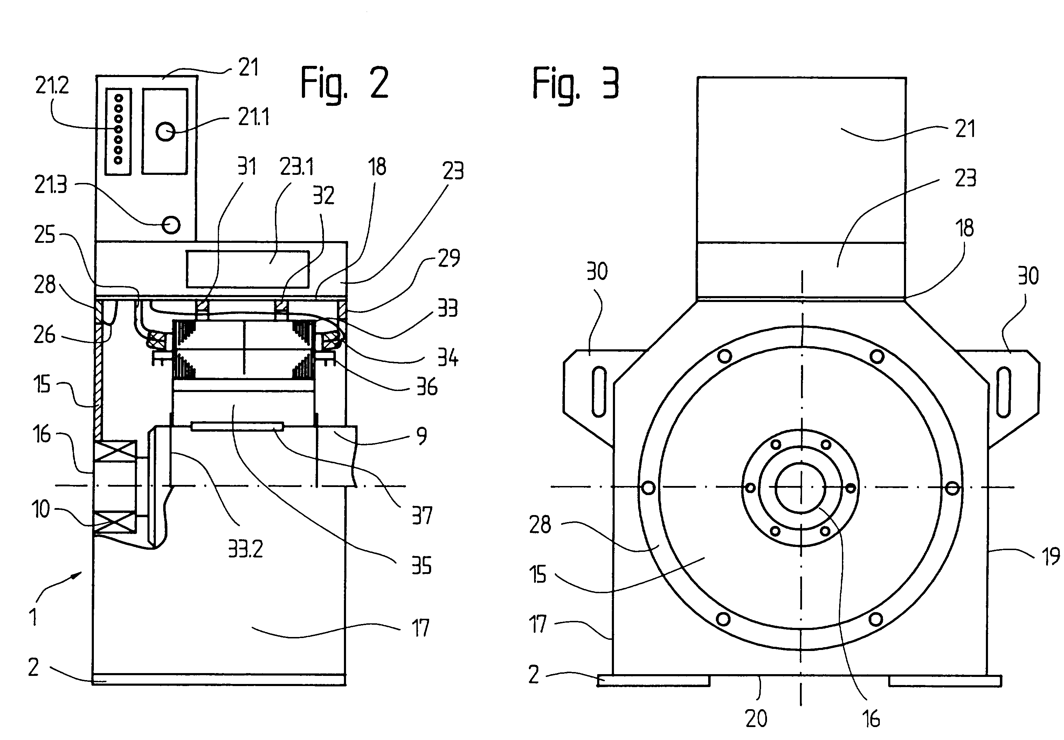

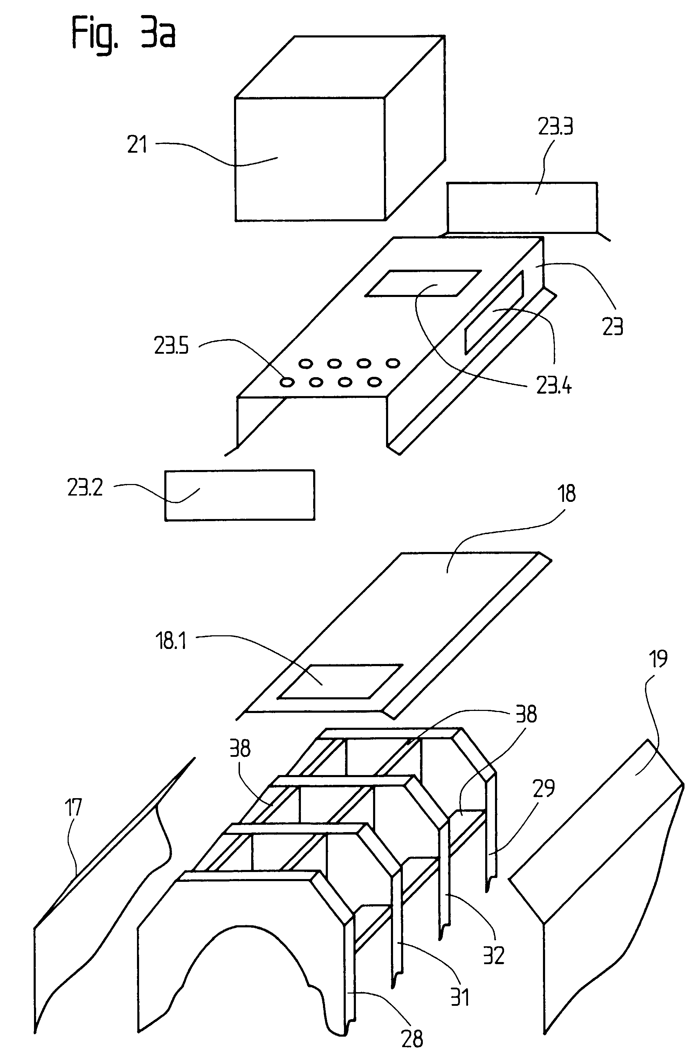

Fig. 2 und 3 zeigen Einzelheiten des Motors 1 in Skelettbauweise. Das das erste Lager 10 tragende Lagerschild 15 ist an einem ersten äusseren Flansch 28 angeordnet. Treibscheibenseitig wird der Motor 1 von einem zweiten äusseren Flansch 29 abgeschlossen, an dem Lastösen 30 angeordnet sind. Ein erster innerer Flansch 31 und zweiter innerer Flansch 32 tragen ein lamelliertes Statorpaket 33 mit einer Wicklung 34. Ein lamelliertes Rotorpaket 35 mit Kurzschlusskäfig 36 ist mittels der Passfeder 37 an der Welle 9 angeordnet. Das Rotorpaket 35 ist direkt auf der Motorwelle 9 angeordnet und mit einem Sicherungsring 33.2 achsial gesichert.

Fig. 3a zeigt Einzelheiten eines Luftkastens 23, der von der zweiten verschalung 18 getragen wird und Öffnungen 23.4 für den Anbau von Ventilatoren 24 aufweist, die an Anschlussdeckeln 23.1 angeordnet werden. Zur Kühlung des Motorinnern wird je nach Kühlbedarf mindestens ein Ventilator 24 rechts, links oder oben montiert. Ein erster Deckel 23.3 und ein zweiter Deckel 23.2 schliessen den Luftkasten 23 seitlich ab. Motoren-Anschlussleitungen werden durch Löcher 23.5 zu einem auf dem Luftkasten 18 angeordneten Klemmenkasten 21 geführt.

Im Klemmenkasten 21 werden Signal- und Steuerleitungen 21.2, Leitungen 21.3 einer Hydraulikpumpe und Netzleitungen 21.1 an Klemmen angeschlossen. Mit 22 ist ein Schutzrohr für Leitungen der Hydraulikpumpe bezeichnet. Im weiteren werden Anschlussleitungen 25 und Leitungen 25.1 des Thermoschutzes des Motors 1, Erdleiter 26 und Leiter 27 von Bremskontakten durch die Löcher 23.5 des Luftkastens 23 in den Klemmenkasten 21 geführt und an den Klemmen angeschlossen.

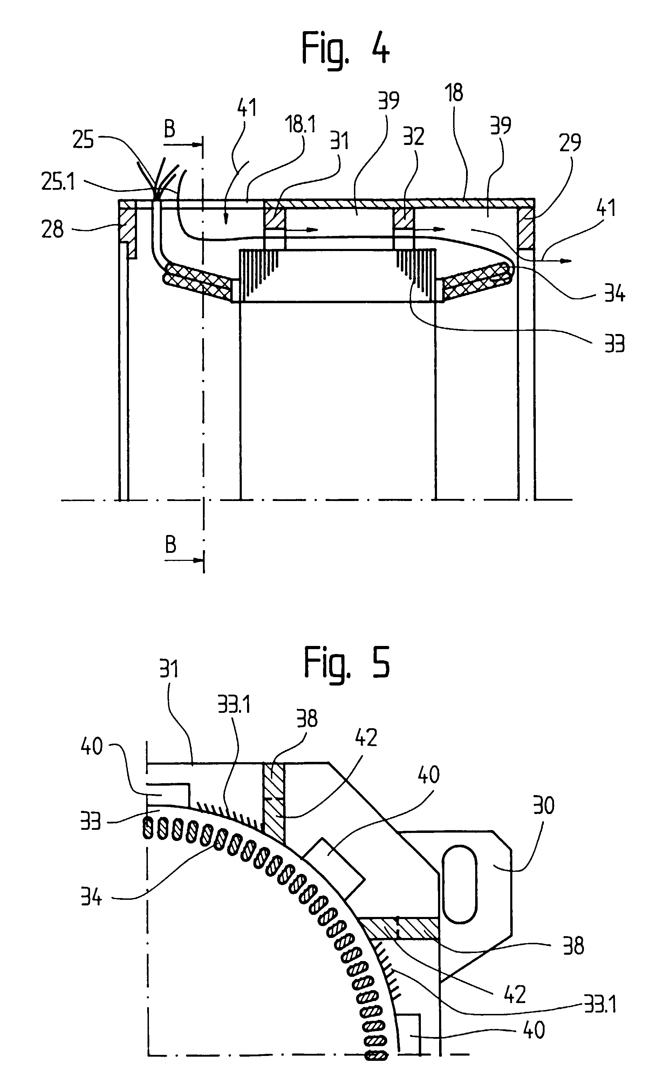

Fig. 4 und 5 zeigen die Luftführung entlang des Statorpaketes 33. Durch Statorpaket 33, Flansche 28,29,31,32, achsial verlaufende Rippen 38 und Verschalungen 17,18,19,20 gebildete Kammern 39 sind durch Lüftungseinschnitte 40,40.1 der inneren Flansche 31,32 und der Rippen 38 miteinander verbunden. Ein vom Ventilator 24 erzeugter Luftstrom 41 wird durch den Luftkasten 23 in den Motor 1 im Bereich des Wicklungskopfes eingeführt. Der Luftstrom 41 durchströmt die Kammern 39, kühlt dabei das Statorpaket 33 mit der Wicklung 34 und verlässt den Motor 1 auf der treibscheibenseitigen Stirnseite.

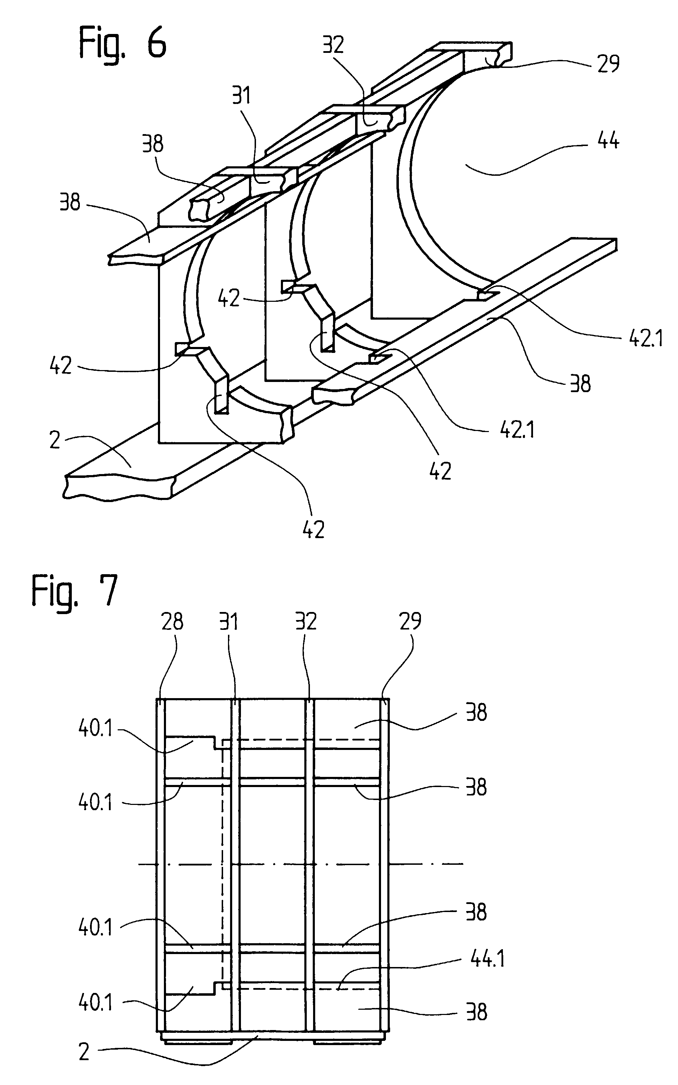

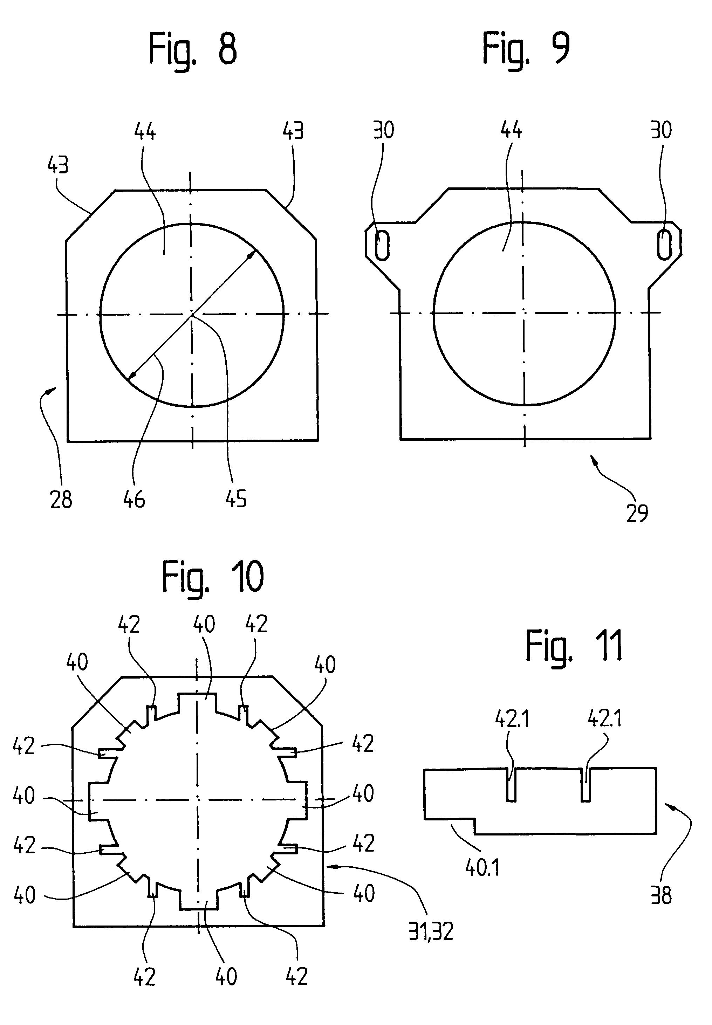

Fig. 6 und 7 zeigt den prinzipiellen Aufbau des tragenden Motorskelettes bestehend aus den quer zur Motorwelle 9 verlaufenden Flanschen 28,29,31,32 mit konzentrisch zur Motorwelle 9 angeordneten Öffnungen 44, in denen längs zur Motorwelle 9 Rippen 38 angeordnet sind. Die inneren Flansche 31,32 und die Rippen 38 weisen Montageeinschnitte 42,42.1 auf, die so gestaltet sind, dass Flansche 31,32 und Rippen 38 zusammensteckbar sind. Die Montageeinschnitte 42,42.1 erlauben ein präzises Zusammenstecken der Flanschen 31,32 mit den Rippen 38, sodass ihre gegenseitige Lage genau bestimmt ist. Montagelehren sind nicht mehr notwendig. Nach dem Zusammenstecken werden die Flansche 31,32 mit den Rippen 38 fertig verschweisst. Die äusseren Flansche 28,29 werden auch stirnseitig verschweisst. Am fertig verschweissten Motorskelett wird durch spanabhebende Bearbeitung eine genaue Aufnahmebohrung 44.1 für das Statorpaket 33 eingearbeitet. Das Statorpaket 33 sitzt mit einem leichten Presssitz in der Aufnahmebohrung 44.1 und wird zusätzlich mit Schweissnähten 33.1 gesichert.

Fig. 8, 9 und 10 zeigen Einzelheiten der Flansche 28,29,31,32. Die Flansche 28,29,31,32 haben eine Rechteckform mit abgeschnittenen oberen Ecken 43. Die kreisrunde Öffnung 44 mit Mittelpunkt im Achsenschnittpunkt 45 der Rechteckachsen, durch den auch die Achse der Motorwelle 9 verläuft, weist einen Durchmesser 46 auf, der durch den Durchmesser des die Öffnung 44 der inneren Flansche 31,32 durchdringenden Statorpaketes 33 bestimmt wird. Wie in Fig. 3, 5 und 9 gezeigt weist der zweite äussere Flansch 29 an den abgeschnittenen Ecken 43 Lastösen 30 auf, an denen Hebezeuge zum Anheben der Antriebsmaschine angreifen. Fig. 10 zeigt Einzelheiten der inneren Flansche 31,32 mit Lüftungseinschnitten 40 und Montageeinschnitten 42. Je Viertelkreis ist ein horizontal und ein vertikal verlaufender Montageeinschnitt 42 vorgesehen, in die je eine Rippe 38 gemäss Fig. 11 mit ihrem Montageeinschnitt 42.1 gesteckt wird.

## Patentansprüche

1. Elektromotor in Skelettbauform bestehend aus quer zur Motorwelle (9) verlaufenden Flanschen (28,29,31,32) mit konzentrisch zur Motorwelle (9) angeordneten Öffnungen (44), in denen längs zur Motorwelle (9) Rippen (38) verlaufen, an denen ein Statorpaket (33) angeordnet ist, wobei Flansche (28,29,31,32) und Rippen (38) ein tragendes Motorskelett bilden, wobei mindestens ein Flansch (31,32) an seiner Öffnung (44) angeordnete Montageeinschnitte (42) aufweist, in die die Rippen (38) einsteckbar sind,
dadurch gekennzeichnet,
dass eine Rippe (38) je Flansch (31,32) einen Montageeinschnitt (42.1) aufweist, der in einen Montageeinschnitt (42) des Flansches (31,32) einsteckbar ist.

2. Elektromotor nach Anspruch 1,
dadurch gekennzeichnet,
dass mindestens ein Flansch (31,32) und die Rippen (38) Lüftungseinschnitte (40,40.1) aufweisen, die die durch Statorpaket (33), Flansche (28,29,31,32), Rippen (38) und Verschalungen (17,18,19,20) gebildete Kammern (39) verbinden, wobei ein von mindestens einem Ventilator (24) erzeugter Luftstrom (41) die Kammern (39) durchströmt.

3. Elektromotor nach Anspruch 2,
dadurch gekennzeichnet,
dass ein mittels einer Verschalung (18) und mittels Deckeln (23.2,23.3) abgeschlossener Luftkasten (23) vorgesehen ist, an dem der Ventilator (24) angeordnet ist.

4. Elektromotor nach Anspruch 3,
dadurch gekennzeichnet,
dass der Luftkasten (23) Anschlussdeckel (23.1) als Platzhalter für mindestens einen Ventilator (24) aufweist.

## Claims

1. Electric motor in skeletal mode of construction, consisting of flanges (28, 29, 31, 32), which extend transversely relative to the motor shaft (9), with openings (44) which are arranged concentrically relative to the motor shaft (9) and in which ribs (38), at which a stator packet (33) is arranged, extend longitudinally relative to the motor shaft (9), wherein flanges (28, 29, 31, 32) and ribs (38) form a load-bearing motor skeleton, wherein at least one flange (31, 32) has assembly incisions (42) which are arranged at its opening (44) and into which the ribs (38) are insertable, characterised in that a rib (38) has for each flange (31, 32) an assembly incision (42.1) which is insertable into an assembly incision (42) of the flange (31, 32).

2. Electric motor according to claim 1, characterised in that at least one flange (31, 32) and the ribs (38) have ventilation incisions (40, 40.1), which connect the chambers (39) formed by stator packet (33), flanges (28, 29, 31, 32), ribs (38) and casings (17, 18, 19, 20), wherein an air flow (41) produced by at least one fan (24) flows through the chambers (39).

3. Electric motor according to claim 2, characterised in that an airbox (23), which is closed by means of a casing (18) and by means of covers (23.2, 23.3) and at which the fan (224) is arranged, is provided.

4. Electric motor according to claim 3, characterised in that the airbox (23) comprises an attachment cover (23.1) as site for at least one fan (24).

## Revendications

1. Moteur électrique à construction en ossature, comprenant des brides (28, 29, 31, 32) transversales par rapport à l'arbre moteur (9) et pourvues d'ouvertures (44) concentriques par rapport à celui-ci dans lesquelles s'étendent, longitudinalement par rapport à l'arbre moteur (9), des nervures (38) sur lesquelles est disposé un paquet de stators (33), étant précisé que les brides (28, 29, 31, 32) et les nervures (38) forment une ossature de moteur porteuse et qu'au moins une bride (31, 32) présente sur son ouverture (44) des encoches de montage (42) dans lesquelles les nervures (38) peuvent être emboîtées,
caractérisé en ce qu'une nervure (38) présente pour chaque bride (31, 32) une encoche de montage (42.1) qui peut être emboîtée dans une encoche de montage (42) de la bride (31, 32).

2. Moteur électrique selon la revendication 1, caractérisé en ce qu'au moins une bride (31, 32) et les nervures (38) présentent des encoches d'aération (40, 40.1) qui relient les chambres (39) formées par le paquet de stators (33), les brides (28, 29, 31, 32), les nervures (38) et les enveloppes (17, 18, 19, 20), moyennant quoi un courant d'air (41) produit par au moins un ventilateur (24) traverse les chambres (39).

3. Moteur électrique selon la revendication 2, caractérisé en ce qu'il est prévu un caisson à air (23), fermé grâce à une enveloppe (18) et à des couvercles (23.2, 23.3), sur lequel est disposé le ventilateur (24).

4. Moteur électrique selon la revendication 3, caractérisé en ce que le caisson à air (23) comporte des couvercles de raccordement (23.1) pour maintenir en place au moins un ventilateur (24).
